# EUROPÄISCHE PATENTSCHRIFT

(11) **EP 4 543 214 B1**
(45) Veröffentlichungstag und Bekanntmachung des Hinweises auf die Patenterteilung: **15.10.2025**
(21) Anmeldenummer: 24701904.5
(22) Anmeldetag: 24.01.2024
(51) Int. Cl.: A23C 20/02, A01J 25/12

(54) **VERFAHREN ZUM HERSTELLEN EINES VEGANEN MOZZARELLA-ERSATZLEBENSMITTELPRODUKTES MIT EINER FASERIGEN TEXTUR SOWIE VEGANES MOZZARELLA-ERSATZLEBENSMITTELPRODUKT**
METHOD FOR PRODUCING A VEGAN MOZZARELLA SUBSTITUTE FOOD PRODUCT HAVING A FIBROUS TEXTURE, AND VEGAN MOZZARELLA SUBSTITUTE FOOD PRODUCT
PROCÉDÉ DE PRODUCTION D'UN PRODUIT ALIMENTAIRE VÉGAN DE SUBSTITUTION DE LA MOZZARELLA AYANT UNE TEXTURE FIBREUSE, ET PRODUIT ALIMENTAIRE VÉGAN DE SUBSTITUTION DE LA MOZZARELLA

(30) Priorität: 02.02.2023 DE 102023102636
(43) Veröffentlichungstag der Anmeldung: 30.04.2025
(73) Patentinhaber: Hochland SE, 88178 Heimenkirch (DE)
(72) Erfinder: KAJDAN, Patrycja Jolanta, 79189 Bad Krozingen (DE); HERRMANN-BÜRK, Dirk Michael, 88279 Amtzell (DE); SINNSTEIN, Martin, 88178 Heimenkirch (DE)
(74) Vertreter: Patent- und Rechtsanwälte Behrmann Wagner PartG mbB
(86) Internationale Anmeldenummer: PCT/EP2024/051606
(87) Internationale Veröffentlichungsnummer: WO 2024/160613

(56) Entgegenhaltungen:
- DE-A1- 102021 103 835
- US-A1- 2021 267 228
- US-A1- 2022 030 902
- FRISCHKÄSE MOZZAVELLA-ZÜGER: "Vegan organic", 30 May 2022 (2022-05-30), XP093006830, Retrieved from the Internet <URL:https://www.frischkaese.ch/en/products/veganer-bio-mozzavella-125g.html> [retrieved on 20221211]

## Beschreibung

Die Erfindung betrifft ein Verfahren gemäß dem Oberbegriff des Patentanspruchs 1 zum Herstellen eines veganen Mozzarella-Ersatzlebensmittelproduktes mit einer faserigen Textur, wobei aus Zutaten, umfassend Wasser, mindestens ein Hydrokolloid, mindestens ein anionisches Polysaccharid, einen pflanzlichen Rohstoff (proteinhaltiger, wertgebender Rohstoff, gemeint sind nicht die funktionalen Zutaten, wie das anionische Polysaccharid oder Hydrokolloide wie beispielsweise Johannisbrotkernmehl) eine Mischung, insbesondere Emulsion hergestellt und erhitzt wird, insbesondere auf eine Temperatur aus einem Temperaturbereich zwischen 70°C und 110°C, wobei die Mischung nach Erhitzen in einer Formeinrichtung zu Formkörpern geformt wird.

Ferner betrifft die Erfindung ein bevorzugt mit dem Verfahren hergestelltes Mozzarella-Ersatzlebensmittelprodukt gemäß dem Oberbegriff des Anspruchs 13 mit einer faserigen, insbesondere hühnerfleischähnlichen, Textur, vorzugsweise herstellbar und/oder hergestellt gemäß dem erfindungsgemäßen Verfahren, beinhaltend als Zutaten Wasser, mindestens ein Hydrokolloid, mindestens ein anionisches Polysaccharid, insbesondere in Form von Naturfasern, bevorzugt Zitrusfasern, einen pflanzlichen Rohstoff (proteinhaltiger, wertgebender Rohstoff, gemeint sind nicht die funktionalen Zutaten, wie das anionische Polysaccharid oder Hydrokolloide wie beispielsweise Johannisbrotkernmehl) sowie bevorzugt Fett. Das Fett, welches bevorzugt im Rahmen des Verfahrens als Zutat zugegeben wird kann in Form von Öl, d.h. bei 20°C flüssigem Fett oder einem bei 20°C festem oder streichfähigem Fett, wie Kokosfett eingesetzt werden, wobei bevorzugt festes Fett vor der Zugabe durch Erwärmen verflüssigt wird.

Aus der DE 10 2021 103 835 A1 ist ein veganes Mozzarella-Ersatzlebensmittelprodukt auf Basis von Linsensamen bekannt. Das Herstellungsverfahren ist durch die Vielzahl von zur Verarbeitung von Linsensamen notwendigen Verfahrensschritten sowohl zeitlich als auch maschinell aufwendig und führt zu Produkten mit hohem Kohlenhydratanteil. Zur Formgebung muss das Lebensmittelprodukt in Formen, insbesondere in Form von Bechern oder Därmen ausgehärtet und verpackt werden.

Weitere vegane Lebensmittelprodukte sind in der WO 2019 133 679 A1 sowie der US 2022 030 902 A1 beschrieben.

Aus dem Internet ist die Offenbarung Frischkäse MozzaVella-Züger: "Vegan organic", bekannt. Die Fundstelle stammt vom 30. Mai 2022, XP093006830, gefunden im Internet: Url: https://www.frischkaese.ch/en/products/veganer-bio-mozzavella-125g.html. Aus der Fundstelle ist ein veganer Mozzarella auf nuss-basis bekannt, der Xanthan, Johannisbrotkernmehl sowie Agar-Agar und Alginat enthält. Das Produkt wird in einem Beutel in Lake eingebettet vertrieben. Das Produkt hat optisch und sensorisch keine faserige Textur.

Aus der Datenbank MINTEL (www.gnpd.com) ist ein veganes Mozzarella-Ersatzlebensmittelprodukt mit der Bezeichnung "MozzaVella" bekannt. Dieses Produkt enthält laut dort angegebener Zutatenliste neben Reismehl einen Anteil von 10,5% Mandelmehl, Agar-Agar und Alginat. Der Kohlenhydratanteil beträgt 6%. Das Produkt hat optisch und sensorisch keine faserige Textur.

Ausgehend von dem vorgenannten Stand der Technik liegt der Erfindung die Aufgabe zugrunde ein vereinfachtes Verfahren zur Herstellung eines veganen mozzarellaähnlichen Lebensmittelproduktes anzugeben, das sich durch eine fasrige Textur auszeichnet. Das Lebensmittelprodukt soll sich wie echter milchbasierter Mozzarella in Lake schwimmend verpacken lassen und sich bevorzugt durch einen geringen Kohlenhydratanteil auszeichnen.

Diese Aufgabe wird hinsichtlich des Verfahrens mit den Merkmalen des Anspruchs 1 und hinsichtlich des veganen Lebensmittelproduktes mit den Merkmalen des Anspruchs 13 gelöst.

Vorteilhafte Weiterbildungen der Erfindung sind in den Unteransprüchen angegeben. In den Rahmen der Erfindung fallen zumindest zwei von in der Beschreibung oder den

Ansprüchen angegeben Merkmalen. Zur Vermeidung von Wiederholungen sollen verfahrensgemäß offenbarte Merkmale auch als produktgemäß offenbart gelten und beanspruchbar sein. Ebenso sollen produktgemäß offenbarte Merkmale als verfahrensgemäß offenbart gelten und beanspruchbar sein, insbesondere in dem Sinn, dass das Verfahren bevorzugt so zu führen ist, dass die Produktmerkmale erzielt werden.

Der Erfindung liegt der Gedanke zugrunde, insbesondere in Abkehr des in der DE 10 2021 013 835 A1 beschriebenen Lebensmittelproduktes auf Linsensamenbasis, dass als pflanzlicher Rohstoff zerkleinerte Kerne, insbesondere Mandeln, und oder Nüsse, insbesondere als Mark oder Mehl, eingesetzt werden und dass die als Gelkörper ausgebildeten, bevorzugt kugelförmigen, Formkörper in unmittelbarem Kontakt zu Wasser, insbesondere in einem Wasserbad, aushärten.

Das erfindungsgemäße Verfahren führt zu einem erfindungsgemäßen Mozzarella-Ersatzlebensmittelprodukt mit einer faserigen Textur, das sich durch einen geringen Kohlenhydratanteil auszeichnet. Kern des Verfahrens ist es, die Mischung, insbesondere die Emulsion so her- bzw. einzustellen, dass diese eine Viskosität aufweist, die also ausreichend zähflüssig bis pastös ist, die es erlaubt, die mittels der Formeinrichtung hergestellten Formkörper in unmittelbarem Kontakt zu gekühltem Wasser, insbesondere in diesem eingetaucht oder schwimmend, zu kühlen, ohne dass die Formkörper zerfallen oder zerfließen also derart, dass die Aushärtung nicht wie im Stand der Technik in formgebenden Hüllen wie Becher oder Därmen erfolgen muss, auf die bevorzugt verzichtet wird. Dies ermöglicht es dann auch die Formkörper bzw. Gelkörper in einer Flüssigkeit, insbesondere Lake zu verpacken und zwar in unmittelbarem Kontakt zu dieser, also ohne dass die Formkörper unmittelbar mit einer Formhülle, beispielswiese aus Kunststoff, umgeben bzw. eingehüllt sind.

Grundsätzlich kann das erfindungsgemäße Produkt mit einer Art von Hydrokolloid hergestellt werden. Bevorzugt ist jedoch zur Reduzierung der Hydrokolloidmenge mehrere, bevorzugt synergistisch wirkende Hydrokolloide, insbesondere Xanthan (Gesamtxanthan im Falle der Verwendung verschiedener Xanthan-Subtypen) und Johannisbrotkernmehl einzusetzen, ganz besonderes bevorzugt in einem Mischungsverhältnis zwischen 0,5:1 und 1:0,5, vorzugsweise zwischen 0,8:1 und 1,2:1, ganz besonders bevorzugt von 1:1. Der synergistische Effekt von Johannisbrotkernmehl und Xanthan wird vermutlich hauptsächlich durch Wasserstoffbrückenbindungen zwischen den beiden Hydrokolloidarten gebildet. Bei dem resultierenden Gelkörper handelt es sich insbesondere um ein physikalisches Gel, das primär durch Wasserstoffbrückenbindungen entsteht, deren Stärke bei niedrigen Temperaturen (= Abschrecken bzw. Aushärten in kaltem Wasser) zunimmt.

Das Gel der Formkörper ist eine viskoelastische Substanz deren elastischen Anteile (= Feststoffanteile) höher sind als die viskosen Anteile (Flüssiganteile). Es entsteht durch die dreidimensionale Verknüpfung von Hydrokolloiden. Die dreidimensionalen Verknüpfungen können kovalente Bindungen sein, wobei vermutet wird, dass in vorliegender Zusammensetzung wohl eher eine Mischung aller sogenannter intermolekularen Kräfte wie Wasserstoffbrückenbindungen, hydrophobe Wechselwirkungen, elektrostatische Wechselwirkungen, ionische Bindungen und kovalente Bindungen vorliegt.

Bevorzugt werden als Zutaten im Gegensatz zum Stand der Technik nicht Agar-Agar und/oder Alginat eingesetzt, so dass das Lebensmittelprodukt bevorzugt frei ist von Agar-Agar und/oder Alginat.

Es hat sich herausgestellt, dass zur Ausbildung der faserigen Struktur der Einsatz mindestens eines negativ geladenen Polysaccharids vorteilhaft ist, insbesondere in Form von Naturfasern, weiter bevorzugt Zitrusfasern. Naturfasern bestehen zu einem hohen Anteil aus Pektin. Alternativ oder zusätzlich einsetzbare anionische Polysaccharide sind beispielsweise Carrageen, reines Pektin Alginat und zu einem gewissen Teil Xanthan. Grundsätzlich könnte auch Alginat eingesetzt werden, auf welches jedoch bevorzugt verzichtet wird.

Die Kerne und/oder Nüsse können in Form von Mark (Mus) und/oder in Form von Mehl eingesetzt werden, wobei grundsätzlich der Einsatz von teilentöltem Mehl möglich ist. Ggf. ist in letzterem Fall zur Erzielung gewünschter Fettgehalte eine höhere Fettzugabe sinnvoll.

Bevorzugt eignen sich helle, insbesondere blanchierte und von einer ggf. vorhandenen Samenhaut befreite Kerne und/oder Nüsse als Zutat, insbesondere wie erwähnt in Form von Mark oder Mehl. Zusätzlich oder alternativ zu Mandeln sind beispielsweise Cashewnüsse einsetzbar, ohne hierauf beschränkt zu sein.

Bevorzugt beträgt der Kohlenhydratanteil der Gesamtheit der zum Einsatz kommenden pflanzlichen Rohstoffe (gemeint sind hier die proteinhaltigen, wertgebenden Rohstoffe, nicht die funktionalen Zutaten, wie das anionische Polysaccharid oder Hydrokolloide wie beispielsweise Johannisbrotkernmehl) weniger als 30 Gew.-%, weiter bevorzugt weniger als 20 Gew.-% (bezogen auf die Summe der pflanzlichen Rohstoffe). Besonders bevorzugt kommt kein pflanzlicher Rohstoff als proteinhaltiger, wertgebender Rohstoff zum Einsatz, dessen Kohlenhydratanteil mehr als 30 Gew.-%, noch weiter bevorzugt mehr als 20 Gew-% beträgt.

Das erfindungsgemäße Lebensmittelprodukt zeichnet sich durch eine makroskopisch wahrnehmbare Faserigkeit ähnlich wie Mozzarella aus Milch aus, im Gegensatz zu bekannten veganen Mozzarellaersatzprodukten, die teilweise keine wahrnehmbare Faserigkeit aufweisen. Die Faserigkeit kann auf mikrostruktureller Ebene durch Konfokalmikroskopie nachgewiesen werden, wobei die in der Probe enthaltenen Hydrokolloide durch unterschiedliche fluoreszierende Farbstoffe spezifisch angefärbt werden. Während ein Mozzarella aus Milch seine Faserigkeit durch Strecken des Caseinnetzwerks das mit Fetttropfen und Wasser durchsetzt ist, erhält, entsteht die Faserigkeit bei dem erfindungsgemäßen Produkt durch das Strecken des Kohlenhydratnetzwerks, das mit proteinstabilisierten Fetttropfen und Wasser durchsetzt ist. In beiden Fällen entsteht ein Netzwerk, das sozusagen in eine Richtung gezogen ist (= Anisotropie).

Besonders bevorzugt ist es, wenn die Zähigkeit der Mischung, insbesondere Emulsion so eingestellt wird, insbesondere durch die Wahl der Art und Menge des mindestens einen anionischen Polysaccharids sowie des mindestens einen Hydrokolloids und im Falle des bevorzugten Einsatzes unterschiedlicher Hydrokolloide zusätzlich durch Ihr Mischungsverhältnis, dass die Formkörper nach der Formung in unmittelbarem Kontakt zu Wasser aushärten können. Dabei hat es sich als vorteilhaft herausgestellt, wenn die Viskosität der Emulsion zwischen 20.000 und 60.000 mPas, bevorzugt zwischen 30.000 und 45.000 mPas beträgt, wobei die Viskosität gemessen wird bei einer Temperatur zwischen 65°C und 85°C, insbesondere bei 75°C, mit einem IKA ROTAVIS me-vi Viskosimeter mit einer Spindel 12 bei einer Rotation der Spindel von 100 U/min.

Besonders bevorzugt ist es, wenn die in Wasser ausgehärteten Formkörper in Lake, bevorzugt in Beuteln, besonders bevorzugt Schlauchbeuteln verpackt werden.

Als besonders vorteilhaft hat es sich herausgestellt, wenn die Formkörper in Weiterbildung der Erfindung in unmittelbarem Kontakt zu dem Wasser, insbesondere im Wasserbad, bis zum Erreichen einer Kerntemperatur zwischen 3°C und 20°C, bevorzugt zwischen 5°C und 15°C, noch weiter bevorzugt zwischen 6°C und 10°C aushärten und bevorzugt danach in Wasser, insbesondere Lake, verpackt werden, besonders bevorzugt wie erwähnt in Beuteln. Bei dem Verpackungswasser kann es sich in Weiterbildung der Erfindung um das Aushärte- bzw. Kühlwasser handeln. Denkbar ist es alternativ Wasser aus einer anderen Quelle als Verpackungswasser einzusetzen. Aushärtewasser und/oder Verpackungswasser zeichnen sich bevorzugt durch den Zusatz von Salz aus und bei Bedarf durch Zugabe von Säure, insbesondere in Form von Milchsäurepulver zur Einstellung eines gewünschten pH-Wertes.

Bevorzugt beträgt eine mittlere Temperatur der Formkörper unmittelbar vor dem unmittelbaren Kontakt zu Wasser über 50°C, bevorzugt über 60°C, ganz besonders bevorzugt 70°C oder darüber. Grundsätzlich ist es im Rahmen einer Weiterbildung der Erfindung möglich kein Fett als weitere bzw. separate Zutat zugegeben. Bevorzugt ist es jedoch den Fettgehalt des Endproduktes durch Fettzugabe, insbesondere Kokosfettzugabe einzustellen, wobei bevorzugt der Anteil des zugegebenen Fettes an der Gesamtheit der Zutaten zwischen 0,1 und 40 Gew.-%., weiter bevorzugt zwischen 5 und 30 Gew.-%, noch weiter bevorzugt zwischen 7 und 15 Gew.-% beträgt. Für den bevorzugten Fall des Einsatzes von bei 20°C festem Fett ist es bevorzugt dieses vor Zugabe zu verflüssigen, insbesondere durch indirekte Erwärmung, bevorzugt ohne direkte Dampfeinstrahlung.

Besonders gute Ergebnisse und eine erleichterte Verarbeitung kann erzielt werden, wenn zum Herstellen der Mischung zunächst eine Vormischung durch Mischen der zerkleinerten Kerne und/oder Nüsse mit weiteren pulverförmigen Zutaten der Zutaten hergestellt wird, bevorzugt ohne Dampfzugabe, und dass die Vormischung mit Wasser gemischt wird. Für den bevorzugten Fall der Fettzugabe im Rahmen der Herstellung der Vormischung erfolgt nach Wasserzugabe eine Emulgierung, so dass es sich dann bei der resultierenden Mischung um eine Emulsion handelt. Die fakultative Zugabe von Aroma ist zur Vormischung möglich und/oder in das Wasser und/oder nach Vermischung von Vormischung und Wasser.

Eine erleichterte Vermischung, insbesondere Emulgierung, kann dadurch unterstützt werden, dass in Weiterbildung der Erfindung das Wasser vor dem Vermischen mit der Vormischung erhitzt wird, insbesondere auf eine Temperatur zwischen 40°C und 80°C, weiter bevorzugt auf 56°C bis 70°C, noch weiter bevorzugt auf 65°C.

Eine optimierte Formbarkeit bei gleichzeitig erhöhter Formstabilität der Formkörper kann in Weiterbildung der Erfindung dadurch erzielt werden, dass die Mischung, insbesondere Emulsion vor dem Aushärten in Wasser, insbesondere vor der Formung der Formkörper auf eine Temperatur aus einem Temperaturbereich zwischen 60°C und 90°C, insbesondere zwischen 65°C und 85°C, gekühlt wird.

Es ist besonders vorteilhaft, wenn die Kühlung der Mischung, insbesondere Emulsion, zumindest teilweise, während des Transportes zu der Formeinrichtung erfolgt, insbesondere durch Transport durch eine Kühlstrecke, bevorzugt umfassend ein gekühltes Transportrohr, insbesondere ein doppelwandiges Kühlrohr.

Zu einer weiter verbesserten Faserigkeit führt es, wenn die Mischung, insbesondere Emulsion, insbesondere nach der Abkühlung, durch Extrusionsmittel, bevorzugt mindestens eine Lochplatte, umfassend eine Mehrzahl von Durchgangslöchern, gefördert wird.

In Weiterbildung der Erfindung ist vorgesehen, dass der Anteil der zerkleinerten Kerne und/oder Nüsse an der Gesamtheit der Zutaten und/oder am Endprodukt (veganes Mozzarella-Ersatzprodukt) zwischen 1 und 30 Gew.-%, bevorzugt zwischen 5 und 25 Gew.-%, besonders bevorzugt zwischen 8 und 17 Gew.-% und/oder dass der Anteil von anionischem Polysaccharid, insbesondere in Form von Naturfasern, weiter bevorzugt Zitrusfasern, an der Gesamtheit der Zutaten zwischen 0,1 und 5 Gew.-%, bevorzugt zwischen 0,5 und 4 Gew.-%, noch weiter bevorzugt zwischen 1 und 3 Gew.-% und/oder dass der Anteil des mindestens einen Hydrokolloids, insbesondere einer Hydrokolloidmischung aus mindestens zwei synergistisch wirkenden Hydrokolloiden, an der Gesamtheit der Zutaten zwischen 0,2 und 10 Gew.-%., bevorzugt zwischen 0,4 und 6 Gew.-%, besonders bevorzugt zwischen 1 und 4 Gew.-%, beträgt. Es kann als Zutat zur pH-Wert Einstellung Säure, insbesondere in Pulverform, bevorzugt Milchsäurepulver zugegeben werden, insbesondere zwischen 0 oder 0,1 und 3 Gew.-%, weiter bevorzugt zwischen 0,1 und 2 Gew.-% noch weiter bevorzugt zwischen 0,2 und 1 Gew.-%.

Ferner ist in Weiterbildung der Erfindung vorgesehen, dass die Mischung, insbesondere Emulsion durch Wahl der Art und Menge der Zutaten so hergestellt wird, dass diese einen Trockenmasseanteil zwischen 10 und 65 Gew.-%, bevorzugt zwischen 15 und 40 Gew.-%, noch weiter bevorzugt zwischen 20 und 35 Gew.-% und/oder einen absoluten Fettgehalt zwischen 0,5 und 55 Gew.-%, bevorzugt zwischen 10 und 45 Gew.-%, noch weiter bevorzugt zwischen 12 und 25 Gew.-% und/oder einen Proteingehalt zwischen 0,2 und 10-Gew.-%, bevorzugt zwischen 1 und 8 Gew.-%, weiter bevorzugt zwischen 2 und 5 Gew.-%aufweist und/oder einen NaCl-Gehalt zwischen 0 und 6 Gew.-%, bevorzugt zwischen 0,1 und 4 Gew.-%, besonders bevorzugt zwischen 0,5 und 2 Gew.-% und/oder einen Kohlenhydratgehalt von kleiner als 5 Gew.-%, insbesondere zwischen 0,01 und 4 Gew.-%, bevorzugt zwischen 0,01 und 3 Gew.-% aufweist.

Die Erfindung führt auch auf ein Mozzarella-Ersatzlebensmittelprodukt mit einer faserigen, insbesondere hühnerfleischähnlichen, Textur, vorzugsweise herstellbar und/oder hergestellt gemäß einem zuvor beschriebenen, erfindungsgemäßen Verfahren, beinhaltend als Zutaten Wasser, mindestens ein Hydrokolloid, mindestens ein anionisches Polysaccharid, insbesondere in Form von Naturfasern, bevorzugt Zitrusfasern, einen pflanzlichen Rohstoff sowie bevorzugt (fakultativ) Fett. Erfindungsgemäß ist vorgesehen, dass der pflanzliche Rohstoff zerkleinerte Kerne, insbesondere Mandeln, und/oder Nüsse, insbesondere als Mark oder Mehl, umfasst oder daraus besteht und dass das Mozzarella-Ersatzlebensmittelprodukt als zu mindestens einem Gelkörper geformter, insbesondere kugelförmiger, Formkörper ausgebildet ist, der bevorzugt nicht von einer Formgebungshülle umgeben, insbesondere nicht in eine solche verpackt, ist. Vorteilhafte Ausgestaltungen des Produktes wurden zuvor im Zusammenhang mit der Erläuterung des Verfahrens beschrieben.

Bevorzugt zeichnet sich das Mozzarella-Ersatzlebensmittelprodukt dadurch aus, dass das Mozzarella-Ersatzlebensmittelprodukt einen Trockenmasseanteil zwischen 10 und 65 Gew.-%, bevorzugt zwischen 15 und 40 Gew.-%, noch weiter bevorzugt zwischen 20 und 35 Gew.-% und/oder einen absoluten Fettgehalt zwischen 0,5 und 55 Gew.-%, bevorzugt zwischen 10 und 45 Gew.-%, noch weiter bevorzugt zwischen 12 und 25 Gew.-% und/oder einen Proteingehalt zwischen 0,2 und 10-Gew.-%, bevorzugt zwischen 1 und 8 Gew.-%, weiter bevorzugt zwischen 2 und 5 Gew.-% aufweist und/oder einen NaCl-Gehalt zwischen 0 und 6 Gew.-%, bevorzugt zwischen 0,1 und 4 Gew.-%, besonders bevorzugt zwischen 0,5 und 2 Gew.-% und/oder einen Kohlenhydratgehalt von kleiner als 5 Gew.-%, insbesondere zwischen 0,01 und 4 Gew.-%, noch weiter bevorzugt zwischen 0,01 und 3 Gew.-% aufweist. Bevorzugt beträgt der pH-Wert bzw. wird eingestellt auf einen Wert zwischen 3,5 und 7, insbesondere zwischen 4 und 6, besonders bevorzugt zwischen 4 und 5.

Die faserige Textur führt zu einer Anisotropie. Als Maß für die Anisotropie des Mozzarella-Ersatzlebensmittelproduktes wird in Weiterbildung der Erfindung ein Verhältnis zwischen einer in Faserrichtung gemessenen maximalen Zugkraft und einer senkrecht zur Faserrichtung gemessenen maximalen Zugkraft bestimmt. Dieses ist bevorzugt größer 1, und beträgt vorzugsweise zwischen 1,1 und 1,7, weiter bevorzugt zwischen 1,2 und 1,7, ganz besonders bevorzugt zwischen 1,25 und 1,7, wobei zur Messung der Zugkraft in Faserrichtung eine auf 7°C temperierte, bevorzugt an beiden Enden zum erleichterten Einspannen verbreiterte, erste Probe des Mozzarella-Ersatz-Lebensmittelproduktes, bei der sich die Fasern in Zugrichtung erstrecken in eine Zugkraftmesseinrichtung eingespannt und mit einer Geschwindigkeit von 1 mm/s in Faserrichtung auseinandergezogen wird und wobei zur Messung der Zugkraft senkrecht zur Faserrichtung eine auf 7°C temperierte, identisch wie die erste Probe geformte zweite Probe des Mozzarella-Ersatz-Lebensmittelproduktes, bei der sich die Fasern senkrecht zur Zugrichtung erstrecken in die Zugkraftmesseinrichtung eingespannt und mit einer Geschwindigkeit von 1 mm/s senkrecht zur Faserrichtung auseinandergezogen wird, wobei das Verhältnis berechnet wird, in dem die maximale Zugkraft, bei der die erste Probe reißt dividiert wird durch die maximale Zugkraft, bei der die zweite Probe reißt, wobei bevorzugt die Zugkraftmessungen durchgeführt werden mit dem Messgerät Instron 5944 der Fa. Instron Illinois Tool Works Inc., USA.

Die Proben weisen bevorzugt die Form von Hundeknochen auf und können durch Ausstempeln aus dem Produkt mit bzw. quer zur Faserrichtung gewonnen werden, insbesondere aus einer entlang der Faserrichtung gewonnen Probe mit einer Dicke von 1cm. Bevorzugt erfolgt die Probennahme aus derselben Scheibe. Ein die zum erleichterten Einspannen in der Messvorrichtung verbreiterten Ende verbindender und im Rahmen der Messung auseinanderzuziehender Abschnitt der Proben weist bevorzugt einen quadratischen Querschnitt (senkrecht zur Zugrichtung) mit einer Kantenlänge von 1cm (Breite und Tiefe) auf sowie eine Länge von 1cm in Zugrichtung.

Besonders bevorzugt ist es, wenn das Lebensmittelprodukt eine Festigkeit aus einem Wertebereich zwischen 25.000 Pa und 70.000 Pa, bevorzugt zwischen 30.000 Pa und 60.000 Pa, noch weiter bevorzugt zwischen 40.000 Pa und 55.000 Pa aufweist, wobei die Festigkeit gemessen wird an einer auf 7°C temperierten Probe durch Einfahren eines Stempels mit einer kreisrunden Stempelfläche von 2cm² in die auf einer formstabilen Unterlage liegenden Probe mit einer Geschwindigkeit von 2 mm/s, wobei die Probe in der linearen Verstellrichtung des Stempels eine Dicke von 2,5 cm aufweist und wobei als Festigkeit der Stempeldruck bei maximaler Verstellkraft gilt, wobei bevorzugt zur Messung der Festigkeit das Messgerät Instron 5944 der Fa. Instron Illinois Tool Works Inc., USA eingesetzt wird. Bei dem Festigkeitswert handelt es sich um das Maximum der aufgenommenen Kraft-/Wegkurve.

Die Erfindung führt auch auf ein System, umfassend ein erfindungsgemäßes Mozzarella-Ersatzlebensmittelprodukt wobei der Formkörper, bevorzugt mehrere Formkörper zusammen, in Wasser, bevorzugt in Lake, weiter bevorzugt in einem Beutel, verpackt ist/sind.

Weitere Vorteile, Merkmale und Eigenschaften eines erfindungsgemäßen Mozzarella-Ersatzlebensmittelproduktes sowie des erfindungsgemäßen Verfahrens zu dessen Herstellung ergeben sich aus den Zeichnungen.

Diese zeigen in:

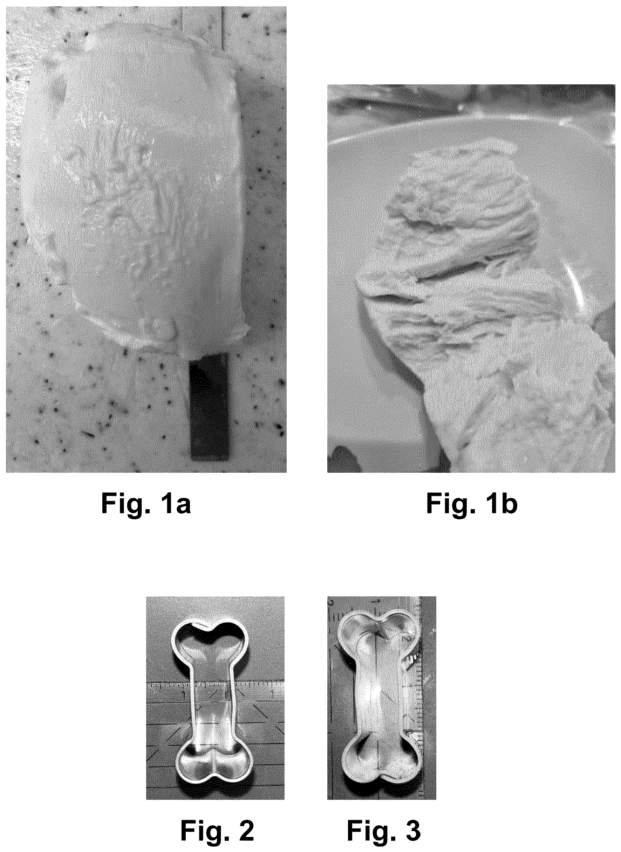

- Fig 1a / 1b:: Ausführungsbeispiele eines erfindungsgemäßen Mozzarella-Ersatzlebensmittelproduktes, wobei in Fig. 1b die hühnerfleischähnliche, mozzarellatypische faserige Textur zu erkennen ist.
- Fig. 2 und 3:: hundeknochenförmige Stempel zur Gewinnung der Proben für die Anisotopiemessung,
- Fig. 4:: eine 1cm dicke (senkrecht zur Faserrichtung gemessen), parallel zur Faserausrichtung geschnittene Scheibe eines Mozzarella-Ersatzproduktes, aus dem jeweils eine Probe für die Anisotropiemessung in bzw. quer zur Faserrichtung mit demselben Stempel oder identisch ausgeformten Stempeln ausgestochen wurde,
- Fig. 5:: Messgerät Instron 5944 der Fa. Instron Illinois Tool Works Inc., USA. für die Anisotropiemessung mit eingespannter Probe,
- Fig. 6:: Messgerät Instron 5944 der Fa. Instron Illinois Tool Works Inc., USA. für die Festigkeitsmessung,
- Fig.7:: ein Konvolut von drei Mikrostrukturaufnahme (CLSM) von Proben eines erfindungsgemäßen Mozzarella-Ersatzlebensmittelproduktes,

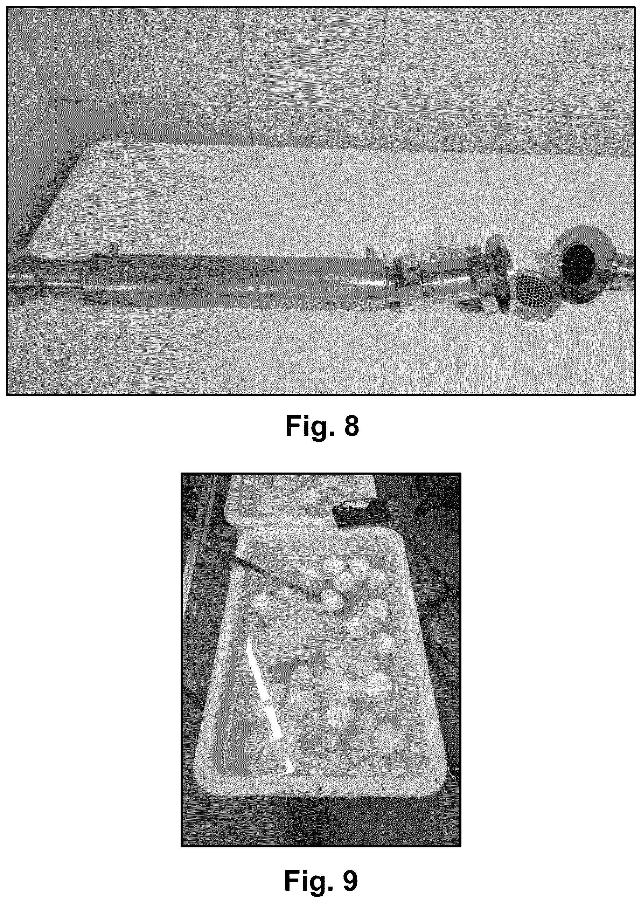

- Fig. 8:: eine demontierte Förderstrecke zum gleichzeitigen Fördern und Kühlen der Emulsion auf dem Weg zur Formeinrichtung, wobei dem gezeigten doppelwandigen Kühlrohr eine Lochscheibe als Extrusionsmittel nachgeordnet ist, und
- Fig. 9:: ein Wasserbad, in dem die Formkörper unmittelbar nach der Formgebung gekühlt und dadurch in unmittelbarem Wasserkontakt ausgehärtet werden.

Aus der folgenden Tabelle 1 ergibt sich eine mögliche Rezeptur/Zusammensetzung (alle Angaben in Gew.-%) zur Herstellung eines Mozzarella-Ersatzlebensmittelproduktes mit faseriger Textur.

**Tabelle 1:**

| | |
|---|---|
| Wasser | 67,5 |
| Kondensat (Wasser) durch direktes Erhitzen mit Dampf | 4 |
| Mandelmark | 13 |
| Kokosfett | 10 |
| ***Xanthan 1*** | |
| ***Xanthan 2*** | |
| **Xanthan ges.** | 1 |
| Salz | 1 |
| Milchsäurepulver | 0,5 |
| Zitrusfaser | 1,5 |
| Aroma | 0,5 |
| Johannisbrotkernmehl | 1,0 |

Zu erkennen ist der Einsatz zweier verschiedener, modifizierter Xanthane 1 bzw 2, die sich in Hinblick auf ihre Gelierungseigenschaften unterscheiden. Der Einsatz verschiedener, insbesondere der vorgenannten, Xanthane ist grundsätzlich vorteilhaft. Zwei unterschiedliche Xanthane werden aber gemeinsam als Xanthan im Sinne eines Hydrokolloids verstanden, so dass es für den bevorzugten Fall des Einsatzes von synergistisch wirkenden Hydrokolloiden noch der Zugabe eines weiteren Hydrokolloids, vorliegend Johannisbrotkernmehl bedarf.

Hieraus ergeben sich bevorzugt näherungsweise dann folgende Produktparameter: TM 27 Gew.-%, F.i.Tr. 63 Gew.-%, Fett abs. 16,5 Gew.-%, NaCl: 1,0 Gew.-%, Protein: 4 Gew.-%, Kohlenhydrate: 1,5 Gew.-%, Wasser: 73 Gew.-%.

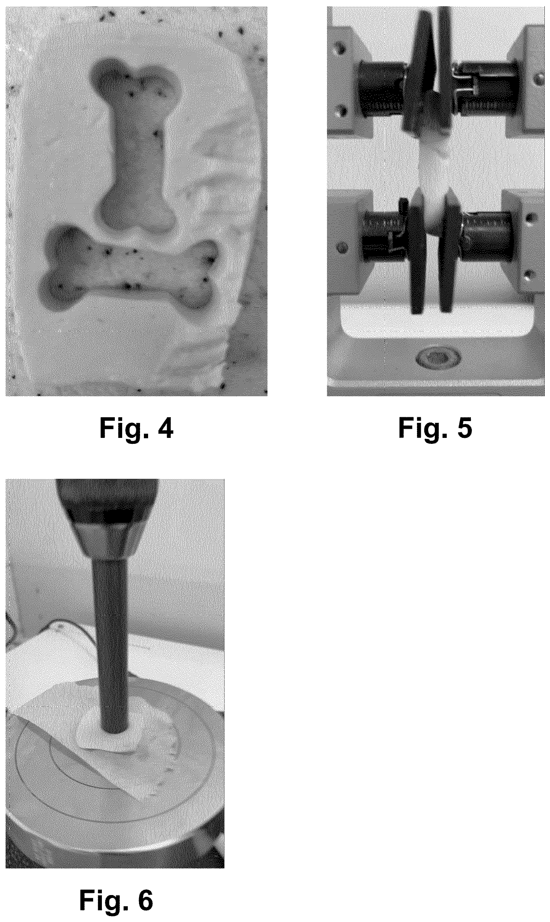

Die Festigkeitsmessung ist in Fig. 6 veranschaulicht. Die Festigkeitsmessung an einem Ausführungsbeispiel der Erfindung ergab 50.000 Pa, kann jedoch auch je nach Ausgestaltung des Verfahrens bzw. der Zutaten noch geringer sein und liegt näher bei dem für Mozzarella auf Milchbasis gemessenen Wert von 27.500 Pa als auf dem Markt befindliche Produkte.

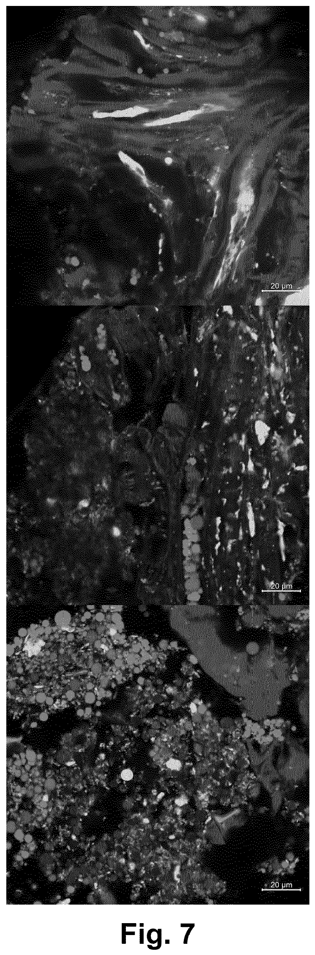

Zur CLSM Untersuchung von Proben eines erfindungsgemäßen Mozzarella-Ersatzlebensmittelproduktes wie in Fig. 7 dargestellt wurde folgende Einfärbung gemäß Tabelle 2 vorgenommen:

**Tabelle 2:**

| **Name** | **Rhodamin B** | **FatRed** | **Calcoflour white** |
|---|---|---|---|
| Anregung (nm) | 546 | 656 | 380 |
| Emission (nm) | 568 | 680 | 475 |
| Farbe (Bilder) | Gelb | Rot | Blau |
| Bindet an | Protein | Fett | Kohlenhydrate/ Glykoproteine¹ |

| | | | |
|---|---|---|---|
| ¹Spezifisch für 1-3 und 1-4 β-Glykosidbindungen (normalerweise für Cellulose, Chitin bzw. Zellwände, d.h. es bindet nicht an andere Glykoside und/oder Verdicker mit anderer chemischer Zusammensetzung) | | | |

Die Faserigkeit kann auf mikrostruktureller Ebene durch Konfokalmikroskopie nachgewiesen werden, wobei die in der Probe enthaltenen Hydrokolloide durch unterschiedliche fluoreszierende Farbstoffe spezifisch angefärbt werden. Während ein Mozzarella aus Milch seine Faserigkeit durch Strecken des Caseinnetzwerks das mit Fetttropfen und Wasser durchsetzt ist, erhält, entsteht die Faserigkeit bei dem erfindungsgemäßen Produkt durch das Strecken des Kohlenhydratnetzwerks, das mit proteinstabilisierten Fetttropfen und Wasser durchsetzt ist. In beiden Fällen entsteht ein Netzwerk, das sozusagen in eine Richtung gezogen ist (= Anisotropie).

In den beiden oberen Aufnahmen gemäß Fig. 7 ist auf die Kohlenhydratebene fokussiert. Daher ist das Fett-Proteinnetzwerk schlecht zu erkennen, welches im unteren Bild durch entsprechende Fokussierung eingeblendet wurde.

Zu erkennen ist immobilisiertes Fett - teilweise koalesziertes/koaleszierendes Fett, welches durch die Strukturbildner immobilisiert wurde. Einzelne Proteinaggregatstrukturen, die sich nahe der Fetttropfen häufen (Kohlenhydrate im Fokus) bzw. Proteinstrukturen umgeben fein dispergiertes Fett (Fett-Proteinmatrix im Fokus).

Die Matrix ist stabilisiert durch Kohlenhydrate (vorliegend Stärke) bzw. durchzogen von Kohlenhydratnetzwerken, die sich um Fett und Protein legen.

## Patentansprüche

1. Verfahren zum Herstellen eines veganen Mozzarella-Ersatzlebensmittelproduktes mit einer faserigen Textur, wobei aus Zutaten, umfassend Wasser, mindestens ein Hydrokolloid, mindestens ein anionisches Polysaccharid, einen pflanzlichen Rohstoff eine Mischung hergestellt und erhitzt wird, insbesondere auf eine Temperatur aus einem Temperaturbereich zwischen 70°C und 110°C, wobei die Mischung nach Erhitzen in einer Formeinrichtung zu Formkörpern geformt wird,
**dadurch gekennzeichnet,**
**dass** die Viskosität der Mischung zwischen 20.000 und 60.000 mPas beträgt, wobei die Viskosität gemessen wird bei einer Temperatur zwischen 65°C und 85°C, insbesondere bei 75°C, mit einem IKA ROTAVIS me-vi Viskosimeter mit einer Spindel 12 bei einer Rotation der Spindel von 100 U/min und dass als pflanzlicher Rohstoff zerkleinerte Kerne, insbesondere Mandeln, und/oder Nüsse, insbesondere als Mark oder Mehl, eingesetzt werden und dass die als Gelkörper ausgebildeten, bevorzugt kugelförmigen, Formkörper in unmittelbarem Kontakt zu Wasser, insbesondere in einem Wasserbad, aushärten.

2. Verfahren nach Anspruch 1,
**dadurch gekennzeichnet,**
**dass** die Viskosität der Mischung zwischen 30.000 und 45.000 mPas beträgt, wobei die Viskosität gemessen wird bei einer Temperatur zwischen 65°C und 85°C, insbesondere bei 75°C, mit einem IKA ROTAVIS me-vi Viskosimeter mit einer Spindel 12 bei einer Rotation der Spindel von 100 U/min.

3. Verfahren nach einem der vorhergehenden Ansprüche,
**dadurch gekennzeichnet,**
**dass** die in Wasser ausgehärteten Formkörper in Wasser, bevorzugt in Lake, weiter bevorzugt in Beuteln, verpackt werden.

4. Verfahren nach einem der vorhergehenden Ansprüche,
**dadurch gekennzeichnet,**
**dass** die Formkörper in unmittelbarem Kontakt zu dem Wasser, insbesondere im Wasserbad, bis zum Erreichen einer Kerntemperatur zwischen 3°C und 20°C, bevorzugt zwischen 5°C und 15°C, noch weiter bevorzugt zwischen 6°C und 10°C aushärten.

5. Verfahren nach einem der vorhergehenden Ansprüche,
**dadurch gekennzeichnet,**
**dass** entweder kein Fett als weitere Zutat zugegeben wird oder dass als weitere Zutat Fett, insbesondere Kokosfett, zur Herstellung der Mischung eingesetzt wird, wobei bevorzugt der Anteil des zugegebenen Fettes an der Gesamtheit der Zutaten zwischen 0,1 und 40 Gew.-%., weiter bevorzugt zwischen 5 und 30 Gew.-%, noch weiter bevorzugt zwischen 7 und 15 Gew.-% beträgt.

6. Verfahren nach Anspruch 5,
**dadurch gekennzeichnet,**
**dass** zum Herstellen der Mischung zunächst eine Vormischung durch Mischen der zerkleinerten Kerne und/oder Nüsse und weiteren pulverförmigen Zutaten und vorzugsweise des flüssigen und/oder verflüssigten, Fettes hergestellt wird, bevorzugt ohne Dampfzugabe, und dass die Vormischung mit Wasser gemischt wird.

7. Verfahren nach einem Anspruch 6,
**dadurch gekennzeichnet,**
**dass** das Wasser vor dem Vermischen mit der Vormischung, insbesondere vor Zugabe der Vormischung zu dem Wasser, erhitzt wird, insbesondere auf eine Temperatur zwischen 40°C und 80°C, weiter bevorzugt auf 56°C bis 70°C, noch weiter bevorzugt auf 65°C.

8. Verfahren nach einem der vorhergehenden Ansprüche,
**dadurch gekennzeichnet,**
**dass** die Mischung vor dem Aushärten in Wasser, insbesondere vor der Formung der Formkörper auf eine Temperatur aus einem Temperaturbereich zwischen 60°C und 90°C, insbesondere zwischen 65°C und 85°C, gekühlt wird.

9. Verfahren nach Anspruch 8,
**dadurch gekennzeichnet,**
**dass** die Kühlung der Mischung, zumindest teilweise, während des Transportes zu der Formeinrichtung erfolgt, insbesondere durch Transport durch eine Kühlstrecke, bevorzugt umfassend ein gekühltes Transportrohr, insbesondere ein doppelwandiges Kühlrohr.

10. Verfahren nach einem der vorhergehenden Ansprüche,
**dadurch gekennzeichnet,**
**dass** die Mischung, insbesondere nach der Abkühlung, durch Extrusionsmittel, bevorzugt mindestens eine Lochplatte, umfassend eine Mehrzahl von Durchgangslöchern, gefördert wird.

11. Verfahren nach einem der vorhergehenden Ansprüche,
**dadurch gekennzeichnet,**
**dass** der Anteil der zerkleinerten Kerne und/oder Nüsse an der Gesamtheit der Zutaten zwischen 1 und 30 Gew.-%, bevorzugt zwischen 5 und 25 Gew.-%, besonders bevorzugt zwischen 8 und 17 Gew.-% und/oder dass der Anteil von anionischem Polysaccharid, insbesondere in Form von Naturfasern, weiter bevorzugt Zitrusfasern, an der Gesamtheit der Zutaten zwischen 0,1 und 5 Gew.-%, bevorzugt zwischen 0,5 und 4 Gew.-%, noch weiter bevorzugt zwischen 1 und 3 Gew.-% und/oder dass der Anteil des mindestens einen Hydrokolloids, insbesondere einer Hydrokolloidmischung aus mindestens zwei synergistisch wirkenden Hydrokolloiden, an der Gesamtheit der Zutaten zwischen 0,2 und 10 Gew.-%., bevorzugt zwischen 0,4 und 6 Gew.-%, besonders bevorzugt zwischen 1 und 4 Gew.-%, beträgt.

12. Verfahren nach einem der vorhergehenden Ansprüche,
**dadurch gekennzeichnet,**
**dass** die Mischung durch Wahl der Zutaten so hergestellt wird, dass diese einen Trockenmasseanteil zwischen 10 und 65 Gew.-%, bevorzugt zwischen 15 und 40 Gew.-%, noch weiter bevorzugt zwischen 20 und 35 Gew.-% und/oder einen absoluten Fettgehalt zwischen 0,5 und 55 Gew.-%, bevorzugt zwischen 10 und 45 Gew.-%, noch weiter bevorzugt zwischen 12 und 25 Gew.-% und/oder einen Proteingehalt zwischen 0,2 und 10-Gew.-%, bevorzugt zwischen 1 und 8 Gew.- %, weiter bevorzugt zwischen 2 und 5 Gew.-%aufweist und/oder einen NaCl-Gehalt zwischen 0 und 6 Gew.-%, bevorzugt zwischen 0,1 und 4 Gew.-%, besonders bevorzugt zwischen 0,5 und 2 Gew.-% und/oder einen Kohlenhydratgehalt von kleiner als 5 Gew.-%, insbesondere zwischen 0,01 und 4 Gew.-%, bevorzugt zwischen 0,01 und 3 Gew. % aufweist.

13. Veganes Mozzarella-Ersatzlebensmittelprodukt vorzugsweise herstellbar und/oder hergestellt gemäß einem Verfahren nach einem der vorhergehenden Ansprüche, beinhaltend als Zutaten Wasser, mindestens ein Hydrokolloid, mindestens ein anionisches Polysaccharid, insbesondere in Form von Naturfasern, bevorzugt Zitrusfasern, einen pflanzlichen Rohstoff sowie bevorzugt Fett, wobei der pflanzliche Rohstoff zerkleinerte Kerne, insbesondere Mandeln, und/oder Nüsse, insbesondere als Mark oder Mehl, umfasst oder daraus besteht und dass das Mozzarella-Ersatzlebensmittelprodukt als zu mindestens einem Gelkörper geformter, insbesondere kugelförmiger, Formkörper ausgebildet ist,
**dadurch gekennzeichnet,**
**dass** das vegane Mozzarella-Ersatzlebensmittelprodukt eine faserige, insbesondere hühnerfleischähnliche, Textur aufweist und dass als Maß für eine Anisotropie des Mozzarella-Ersatzlebensmittelproduktes ein Verhältnis zwischen einer in Faserrichtung gemessenen maximalen Zugkraft und einer senkrecht zur Faserrichtung gemessenen maximalen Zugkraft größer 1, vorzugsweise zwischen 1,1 und 1,7, bevorzugt zwischen 1,2 und 1,7, ganz besonders bevorzugt zwischen 1,25 und 1,7 beträgt, wobei zur Messung der Zugkraft in Faserrichtung eine auf 7°C temperierte, bevorzugt an beiden Enden zum erleichterten Einspannen verbreiterte, erste Probe des Mozzarella-Ersatz-Lebensmittelproduktes, bei der sich die Fasern in Zugrichtung erstrecken in eine Zugkraftmesseinrichtung eingespannt und mit einer Geschwindigkeit von 1 mm/s in Faserrichtung auseinandergezogen wird und wobei zur Messung der Zugkraft senkrecht zur Faserrichtung eine auf 7°C temperierte, identisch wie die erste Probe geformte zweite Probe des Mozzarella-Ersatz-Lebensmittelproduktes, bei der sich die Fasern senkrecht zur Zugrichtung erstrecken in die Zugkraftmesseinrichtung eingespannt und mit einer Geschwindigkeit von 1 mm/s senkrecht zur Faserrichtung auseinandergezogen wird, wobei das Verhältnis berechnet wird, in dem die maximale Zugkraft, bei der die erste Probe reißt dividiert wird durch die maximale Zugkraft, bei der die zweite Probe reißt, wobei bevorzugt die Zugkraftmessungen durchgeführt werden mit dem Messgerät Instron 5944 der Fa. Instron Illinois Tool Works Inc., USA.

14. Mozzarella-Ersatzlebensmittelprodukt nach Anspruch 13,
**dadurch gekennzeichnet,**
**dass** das Mozzarella-Ersatzlebensmittelprodukt einen Trockenmasseanteil zwischen 10 und 65 Gew.-%, bevorzugt zwischen 15 und 40 Gew.-%, noch weiter bevorzugt zwischen 20 und 35 Gew.-% und/oder einen absoluten Fettgehalt zwischen 0,5 und 55 Gew.-%, bevorzugt zwischen 10 und 45 Gew.-%, noch weiter bevorzugt zwischen 12 und 25 Gew.-% und/oder einen Proteingehalt zwischen 0,2 und 10-Gew.-%, bevorzugt zwischen 1 und 8 Gew.-%, weiter bevorzugt zwischen 2 und 5 Gew.-%aufweist und/oder einen NaCl-Gehalt zwischen 0 und 6 Gew.-%, bevorzugt zwischen 0,1 und 4 Gew.-%, besonders bevorzugt zwischen 0,5 und 2 Gew.-% und/oder einen Kohlenhydratgehalt von kleiner als 5 Gew.-%, insbesondere zwischen 0,01 und 4 Gew.-%, noch weiter bevorzugt zwischen 0,01 und 3 Gew.-% aufweist.

15. Mozzarella-Ersatzlebensmittelprodukt nach einem der Ansprüche 13 oder 14,
**dadurch gekennzeichnet,**
**dass** der Gelkörper nicht von einer Formgebungshülle umgeben, insbesondere nicht in einer solchen verpackt, ist und/oder einen Kohlenhydratanteil von kleiner als 5 Gew.-% aufweist.

16. Mozzarella-Ersatzlebensmittelprodukt nach einem der Ansprüche 13 bis 15,
**dadurch gekennzeichnet,**
**dass** dieses eine Festigkeit aus einem Wertebereich zwischen 25.000 Pa und 70.000 Pa aufweist, bevorzugt wischen 30.000 Pa und 60.000 Pa, noch weiter bevorzugt zwischen 40.000 Pa und 55.000 Pa aufweist, wobei die Festigkeit gemessen wird an einer auf 7°C temperierten, Probe durch Einfahren eines Stempels mit einer kreisrunden Stempelfläche von 2cm² in die auf einer formstabilen Unterlage liegenden Probe mit einer Geschwindigkeit von 2 mm/s, wobei die Probe in der linearen Verstellrichtung des Stempels eine Dicke von 2,5 cm aufweist und wobei als Festigkeit der Stempeldruck bei maximaler Verstellkraft gilt, wobei bevorzugt zur Messung der Festigkeit das Messgerät Instron 5944 der Fa. Instron Illinois Tool Works Inc., USA eingesetzt wird.

17. System, umfassend ein Mozzarella-Ersatzlebensmittelprodukt nach einem der Ansprüche 13 bis 16,
**dadurch gekennzeichnet,**
**dass** der Formkörper, bevorzugt mehrere Formkörper zusammen, in Wasser, insbesondere in Lake, weiter bevorzugt in einem Beutel, verpackt ist/sind.

## Claims

1. A method for producing a vegan mozzarella substitute food product having a fibrous texture, wherein from ingredients comprising water, at least one hydrocolloid, at least one anionic polysaccharide, and a plant-based material a mixture is produced and heated, in particular to a temperature from a temperature range between 70 °C and 110 °C, wherein the mixture after being heated is molded into molded bodies in a molding device,
**characterized in that**
the viscosity of the mixture is between 20,000 and 60,000 mPas, the viscosity being measured at a temperature between 65 °C and 85 °C, in particular at 75 °C, using an IKA ROTAVIS me-vi viscometer with a spindle 12 at a rotation of the spindle of 100 rpm, and that crushed seeds, in particular almonds, and/or nuts are used as the plant-based material, in particular in the form of pulp or flour, and that the preferably spherical molded bodies, which are in the form of gel bodies, congeal in direct contact with water, in particular in a water bath.

2. The method according to claim 1,
**characterized in that**
the viscosity of the mixture is between 30,000 and 45,000 mPas, the viscosity being measured at a temperature between 65 °C and 85 °C, in particular at 75 °C, using an IKA ROTAVIS me-vi viscometer with a spindle 12 at a rotation of the spindle of 100 rpm.

3. The method according to any one of the preceding claims, **characterized in that**
the molded bodies congealed in water are packaged in water, preferable in brine, further preferably in bags.

4. The method according to any one of the preceding claims,
**characterized in that**
the molded bodies congeal in direct contact with the water, in particular in the water bath, until they reach a core temperature between 3 °C and 20 °C, preferably between 5 °C and 15 °C, more preferably between 6 °C and 10 °C.

5. The method according to any one of the preceding claims,
**characterized in that**
either no fat is added as another ingredient or fat, in particular coconut fat, is used as another ingredient to produce the mixture, the content of the added fat in the total amount of ingredients preferably being between 0.1 and 40 wt. %., further preferably between 5 and 30 wt. %, even further preferably between 7 and 15 wt. %.

6. The method according to claim 5,
**characterized in that**
to produce the mixture, a pre-mixture is produced first by mixing the crushed seeds and/or nuts and other powdery ingredients and preferably the liquid and/or liquefied fat, preferably without the addition of steam, and that the pre-mixture is mixed with water.

7. The method according to claim 6,
**characterized in that**
prior to being mixed with the pre-mixture, in particular prior to the addition of the pre-mixture to the water, the water is heated, in particular to a temperature between 40 °C and 80 °C, further preferably to 56 °C to 70 °C, even further preferably to 65 °C.

8. The method according to any one of the preceding claims,
**characterized in that**
prior to the congealing in water, in particular prior to the molding of the molded bodies, the mixture is cooled to a temperature from a temperature range between 60 °C and 90 °C, in particular between 65 °C and 85 °C.

9. The method according to claim 8,
**characterized in that**
at least part of the cooling of the mixture takes place during transport to the molding device, in particular by transport through a cooling section, which preferably comprises a cooled transport tube, in particular a double-wall cooling tube.

10. The method according to any one of the preceding claims,
**characterized in that**,
in particular after cooling, the mixture is transported through extrusion means, preferably at least one perforated plate comprising a plurality of through holes.

11. The method according to any one of the preceding claims,
**characterized in that**
the content of the crushed seeds and/or nuts in the total amount of ingredients is between 1 and 30 wt. %, preferably between 5 and 25 wt. %, particularly preferably between 8 and 17 wt.%, and/or that the content of anionic polysaccharide, in particular in the form of natural fibers, further preferably citrus fibers, in the total amount of ingredients is between 0.1 and 5 wt. %, preferably between 0.5 and 4 wt.%, even further preferably between 1 and 3 wt.%, and/or that the content of the at least one hydrocolloid, in particular a hydrocolloid mixture of at least two synergistic hydrocolloids, in the total amount of ingredients is between 0.2 and 10 wt. %., preferably between 0.4 and 6 wt. %, particularly preferably between 1 and 4 wt. %.

12. The method according to any one of the preceding claims,
**characterized in that**
by selection of the ingredients, the mixture is produced in such a manner that it has a dry matter content of between 10 and 65 wt. %, preferably between 15 and 40 wt.%, even further preferably between 20 and 35 wt. %, and/or an absolute fat content of between 0.5 and 55 wt.%, preferably between 10 and 45 wt. %, even further preferably between 12 and 25 wt.%, and/or a protein content of between 0.2 and 10 wt.%, preferably between 1 and 8 wt.%, further preferably between 2 and 5 wt. %, and/or a NaCl content of between 0 and 6 wt. %, preferably between 0.1 and 4 wt.%, particularly preferably between 0.5 and 2 wt. %, and/or a carbohydrate content of less than 5 wt. %, in particular between 0.01 and 4 wt. %, preferably between 0.01 and 3 wt. %.

13. A vegan mozzarella substitute food product, preferably producible and/or produced according to a method according to any one of the preceding claims, the mozzarella substitute food product containing water, at least one hydrocolloid, at least one anionic polysaccharide, in particular in the form of natural fibers, preferably citrus fibers, a plant-based material, and preferably fat as ingredients, the plant-based material comprising or consisting of crushed seeds, in particular almonds, and/or nuts, in particular in the form of pulp or flour, and the mozzarella substitute food product being in the form of an in particular spherical molded body molded into at least one gel body,
**characterized in that**
the vegan mozzarella substitute food product has a fibrous texture, in particular similar to chicken meat, and that a ratio between a maximum tensile force measured in the fiber direction and a maximum tensile force measured perpendicular to the fiber direction as a measure for an anisotropy of the mozzarella substitute food product is greater than 1, preferably between 1.1 and 1.7, preferably between 1.2 and 1.7, particularly preferably between 1.25 and 1.7, a first sample of the mozzarella substitute food product, in which the fibers run in the pulling direction and whose temperature is 7 °C and which is preferably widened on both ends for ease of clamping, being clamped in a tensile-force measuring device and pulled apart in the fiber direction at a speed of 1 mm/s to measure the tensile force in the fiber direction, and a second sample of the mozzarella substitute food product, in which the fibers run perpendicular to the pulling direction and whose temperature is 7 °C and which has a shape identical to the first sample, being clamped in the tensile-force measuring device and pulled apart perpendicular to the fiber direction at a speed of 1 mm/s to measure the tensile force perpendicular to the fiber direction, the ratio being calculated by dividing the maximum tensile force at which the first sample ruptures by the maximum tensile force at which the second sample ruptures, the tensile-force measurements preferably being carried out using the measuring device Instron 5944 by Instron Illinois Tool Works Inc., USA.

14. The mozzarella substitute food product according to claim 13,
**characterized in that**
the mozzarella substitute food product has a dry matter content of between 10 and 65 wt. %, preferably between 15 and 40 wt. %, even further preferably between 20 and 35 wt. %, and/or an absolute fat content of between 0.5 and 55 wt. %, preferably between 10 and 45 wt.%, even further preferably between 12 and 25 wt. %, and/or a protein content of between 0.2 and 10 wt. %, preferably between 1 and 8 wt. %, further preferably between 2 and 5 wt. %, and/or a NaCl content of between 0 and 6 wt. %, preferably between 0.1 and 4 wt. %, particularly preferably between 0.5 and 2 wt.%, and/or a carbohydrate content of less than 5 wt. %, in particular between 0.01 and 4 wt. %, even further preferably between 0.01 and 3 wt. %.

15. The mozzarella substitute food product according to any one of claims 13 or 14,
**characterized in that**
the gel body is not surrounded by, in particular not packaged in, a shaping casing and/or has a carbohydrate content of less than 5 wt. %.

16. The mozzarella substitute food product according to any one of claims 13 to 15,
**characterized in that**
the mozzarella substitute food product has a strength from a value range between 25,000 Pa and 70,000 Pa, preferably between 30,000 Pa and 60,000 Pa, even further preferably between 40,000 Pa and 55,000 Pa, the strength being measured using a sample whose temperature is 7 °C by penetrating the sample, which rests on a structurally stable surface, with a plunger having a circular plunger surface area of 2 cm² at a speed of 2 mm/s, the sample having a thickness of 2.5 cm in the linear feeding direction of the plunger, and the plunger pressure at maximum feeding force being the strength, the strength preferably being measured using the measuring device Instron 5944 by Instron Illinois Tool Works Inc., USA.

17. A system comprising a mozzarella substitute food product according to any one of claims 13 to 16,
**characterized in that**
the molded body, preferably multiple molded bodies together, is/are packaged in water, in particular in brine, further preferably in a bag.

## Revendications

1. Procédé de production d'un produit alimentaire végétalien de substitution de la mozzarella ayant une texture fibreuse, des ingrédients comprenant de l'eau, au moins un hydrocolloïde, au moins un polysaccharide anionique et une matière végétale étant mélangés et chauffés, notamment à une température comprise dans une plage de températures entre 70°C et 110°C, le mélange chauffé étant moulé en corps moulés dans un dispositif de moulage,
**caractérisé en ce que**
la viscosité du mélange est comprise entre 20 000 et 60000 mPas, la viscosité étant mesurée à une température comprise entre 65 °C et 85 °C, notamment à 75°C, à l'aide d'un viscosimètre IKA ROTAVIS me-vi avec une broche 12 à une vitesse de rotation de la broche de 100 tr/min, et **en ce que** des graines, notamment des amandes, et/ou des noix broyées sont utilisées comme matière végétale, notamment sous forme de pulpe ou de farine, et **en ce que** les corps moulés de préférence sphériques, qui se présentent sous la forme de corps gélatineux, se solidifient au contact direct de l'eau, notamment dans un bain d'eau.

2. Procédé selon la revendication 1,
**caractérisé en ce que**
la viscosité du mélange est comprise entre 30 000 et 45000 mPas, la viscosité étant mesurée à une température comprise entre 65 °C et 85 °C, notamment à 75°C, à l'aide d'un viscosimètre **IKA** ROTAVIS me-vi avec une broche 12 à une vitesse de rotation de la broche de 100 tr/min.

3. Procédé selon l'une quelconque des revendications précédentes,
**caractérisé en ce que**
les corps moulés solidifiés dans de l'eau sont conditionnés dans de l'eau, de préférence dans de la saumure, encore de préférence dans des sacs.

4. Procédé selon l'une quelconque des revendications précédentes,
**caractérisé en ce que**
les corps moulés se solidifient au contact direct de l'eau, notamment dans le bain d'eau, jusqu'à ce qu'ils atteignent une température à cœur comprise entre 3 °C et 20 °C, de préférence entre 5 °C et 15 °C, plus préférablement entre 6 °C et 10 °C.

5. Procédé selon l'une quelconque des revendications précédentes,
**caractérisé en ce que**
soit aucune graisse n'est ajoutée comme autre ingrédient, soit de la graisse, notamment de la graisse de coco, est utilisée comme autre ingrédient pour la production du mélange, la teneur en graisse ajoutée dans la quantité totale des ingrédients étant de préférence comprise entre 0,1 et 40 % en poids, encore de préférence entre 5 et 30 % en poids, encore de préférence entre 7 et 15 % en poids.

6. Procédé selon la revendication 5,
**caractérisé en ce que**
pour la production du mélange, un pré-mélange est d'abord produit en mélangeant les graines et/ou noix broyées et d'autres ingrédients pulvérulents et de préférence la graisse liquide et/ou liquéfiée, de préférence sans ajout de vapeur, et **en ce que** le pré-mélange est mélangé avec de l'eau.

7. Procédé selon la revendication 6,
**caractérisé en ce**
**qu'**avant d'être mélangée au pré-mélange, notamment avant l'ajout du pré-mélange à l'eau, l'eau est chauffée, notamment à une température comprise entre 40 °C et 80 °C, de préférence entre 56 °C et 70 °C, encore de préférence à 65 °C.

8. Procédé selon l'une quelconque des revendications précédentes,
**caractérisé en ce**
**qu'**avant la solidification dans l'eau, notamment avant le moulage des corps moulés, le mélange est refroidi à une température comprise dans une plage de températures comprise entre 60 °C et 90 °C, notamment entre 65 °C et 85 °C.

9. Procédé selon la revendication 8,
**caractérisé en ce**
**qu'**au moins une partie du refroidissement du mélange a lieu pendant le transport vers le dispositif de moulage, notamment par transport à travers une section de refroidissement, qui comprend de préférence un tube de transport refroidi, notamment un tube de refroidissement à double paroi.

10. Procédé selon l'une quelconque des revendications précédentes,
**caractérisé en ce que**,
notamment après le refroidissement, le mélange est transporté à travers des moyens d'extrusion, de préférence au moins une plaque perforée comprenant une pluralité de trous traversants.

11. Procédé selon l'une quelconque des revendications précédentes,
**caractérisé en ce que**
la teneur en graines et/ou noix broyées dans la quantité totale d'ingrédients est comprise entre 1 et 30 % en poids, de préférence entre 5 et 25 % en poids, de manière particulièrement préférée entre 8 et 17 % en poids, et/ou que la teneur en polysaccharide anionique, notamment sous forme de fibres naturelles, de préférence encore en fibres d'agrumes, dans la quantité totale d'ingrédients est comprise entre 0,1 et 5 % en poids, de préférence entre 0,5 et 4 % en poids, encore de préférence entre 1 et 3 % en poids, et/ou que la teneur en au moins un hydrocolloïde, notamment un mélange hydrocolloïdal d'au moins deux hydrocolloïdes synergiques, dans la quantité totale d'ingrédients est comprise entre 0,2 et 10 % en poids, de préférence entre 0,4 et 6 % en poids, de manière particulièrement préférée entre 1 et 4 % en poids.

12. Procédé selon l'une quelconque des revendications précédentes,
**caractérisé en ce que**
par sélection des ingrédients, le mélange est produit de telle manière qu'il présente une teneur en matière sèche comprise entre 10 et 65 % en poids, de préférence entre 15 et 40 % en poids, encore de préférence entre 20 et 35 % en poids, et/ou une teneur absolue en matières grasses comprise entre 0,5 et 55 % en poids, de préférence entre 10 et 45 % en poids, encore de préférence entre 12 et 25 % en poids, et/ou une teneur en protéines comprise entre 0,2 et 10 % en poids, de préférence entre 1 et 8 % en poids, encore de préférence entre 2 et 5 % en poids, et/ou une teneur en NaCl comprise entre 0 et 6 % en poids, de préférence comprise entre 0,1 et 4 % en poids, de préférence particulière comprise entre 0,5 et 2 % en poids, et/ou une teneur en glucides inférieure à 5 % en poids, notamment comprise entre 0,01 et 4 % en poids, de préférence comprise entre 0,01 et 3 % en poids.

13. Produit alimentaire végétalien de substitution de la mozzarella, de préférence pouvant être produit et/ou étant produit selon un procédé selon l'une quelconque des revendications précédentes, le produit alimentaire de substitution de la mozzarella contenant de l'eau, au moins un hydrocolloïde, au moins un polysaccharide anionique, notamment sous forme de fibres naturelles, de préférence des fibres d'agrumes, une matière végétale, et de préférence de la graisse comme ingrédients, la matière végétale comprenant ou consistant en des graines, notamment des amandes, et/ou des noix broyées, notamment sous forme de pulpe ou de farine, et le produit alimentaire de substitution de la mozzarella se présentant sous la forme d'un corps moulé notamment sphérique moulé en au moins un corps gélatineux,
**caractérisé en ce que**
le produit alimentaire végétalien de substitution de la mozzarella a une texture fibreuse, notamment similaire à celle de la viande de poulet, et qu'un rapport entre une force de traction maximale mesurée dans le sens des fibres et une force de traction maximale mesurée perpendiculairement au sens des fibres, qui sert de mesure pour l'anisotropie du produit alimentaire de substitution de la mozzarella, est supérieur à 1, de préférence compris entre 1,1 et 1,7, préférablement entre 1,2 et 1,7, de préférence particulière entre 1,25 et 1,7, un premier échantillon du produit alimentaire de substitution de la mozzarella, dans lequel les fibres s'étendent dans le sens de traction et dont la température est de 7 °C et qui est de préférence élargi aux deux extrémités pour faciliter le serrage, étant serré dans un dispositif de mesure de la force de traction et tiré dans le sens des fibres à une vitesse de 1 mm/s pour mesurer la force de traction dans le sens des fibres, et un deuxième échantillon du produit alimentaire de substitution de la mozzarella, dans lequel les fibres s'étendent perpendiculairement à la direction de traction et dont la température est de 7 °C et qui a une forme identique à celle du premier échantillon, étant serré dans le dispositif de mesure de la force de traction et tiré perpendiculairement au sens des fibres à une vitesse de 1 mm/s pour mesurer la force de traction perpendiculairement au sens des fibres, le rapport étant calculé en divisant la force de traction maximale à laquelle le premier échantillon se rompt par la force de traction maximale à laquelle le deuxième échantillon se rompt, les mesures de la force de traction étant de préférence effectuées à l'aide du dispositif de mesure Instron 5944 de la société Instron Illinois Tool Works Inc., États-Unis.

14. Produit alimentaire de substitution de la mozzarella selon la revendication 13,
**caractérisé en ce que**
le produit alimentaire de substitution de la mozzarella a une teneur en matière sèche comprise entre 10 et 65 % en poids, de préférence entre 15 et 40 % en poids, encore de préférence entre 20 et 35 % en poids, et/ou une teneur absolue en matières grasses comprise entre 0,5 et 55 % en poids, de préférence entre 10 et 45 % en poids, encore de préférence entre 12 et 25 % en poids, et/ou une teneur en protéines comprise entre 0,2 et 10 % en poids, de préférence entre 1 et 8 % en poids, encore de préférence entre 2 et 5 % en poids, et/ou une teneur en NaCl comprise entre 0 et 6 % en poids, de préférence comprise entre 0,1 et 4 % en poids, de préférence particulière comprise entre 0,5 et 2 % en poids, et/ou une teneur en glucides inférieure à 5 % en poids, notamment comprise entre 0,01 et 4 % en poids, encore de préférence comprise entre 0,01 et 3 % en poids.

15. Produit alimentaire de substitution de la mozzarella selon l'une quelconque des revendications 13 ou 14,
**caractérisé en ce que**
le corps gélatineux n'est pas entouré, notamment n'est pas conditionné, dans une enveloppe de mise en forme et/ou il a une teneur en glucides inférieure à 5 % en poids.

16. Produit alimentaire de substitution de la mozzarella selon l'une quelconque des revendications 13 à 15,
**caractérisé en ce que**
le produit alimentaire de substitution de la mozzarella a une résistance comprise dans une plage de valeurs entre 25 000 Pa et 70 000 Pa, de préférence entre 30 000 Pa et 60000 Pa, encore de préférence entre 40 000 Pa et 55 000 Pa, la résistance étant mesurée à l'aide d'un échantillon dont la température est de 7 °C en pénétrant dans l'échantillon, qui repose sur une surface structurellement stable, avec un piston ayant une surface de piston circulaire de 2 cm² à une vitesse de 2 mm/s, l'échantillon ayant une épaisseur de 2,5 cm dans la direction d'avance linéaire du piston, et la pression du piston à la force d'avance maximale étant la résistance, la résistance étant de préférence mesurée à l'aide du dispositif de mesure Instron 5944 de la société Instron Illinois Tool Works Inc., États-Unis.

17. Système comprenant un produit alimentaire de substitution de la mozzarella selon l'une quelconque des revendications 13 à 16,
**caractérisé en ce que**
le corps moulé, de préférence plusieurs corps moulés ensemble, est/sont conditionné(s) dans de l'eau, notamment dans de la saumure, encore de préférence dans un sac.
